(19) Europäisches Patentamt
European Patent Office
Office européen des brevets

(11) Veröffentlichungsnummer: **0 244 635 B1**

# (12) EUROPÄISCHE PATENTSCHRIFT

(45) Veröffentlichungstag der Patentschrift: **27.03.91**

(51) Int. Cl.[5]: **B01D 69/00**, B01D 53/22, B01D 71/40

(21) Anmeldenummer: **87104850.0**

(22) Anmeldetag: **02.04.87**

## (54) Verfahren zur Erhöhung der Selektivität asymmetrischer Membranen.

(30) Priorität: **09.05.86 DE 3615649**

(43) Veröffentlichungstag der Anmeldung:
**11.11.87 Patentblatt 87/46**

(45) Bekanntmachung des Hinweises auf die Patenterteilung:
**27.03.91 Patentblatt 91/13**

(84) Benannte Vertragsstaaten:
**DE FR GB IT NL**

(56) Entgegenhaltungen:
**EP-A- 0 141 793**
**EP-A- 0 144 054**
**DE-A- 3 420 373**
**US-A- 4 527 999**
**US-A- 4 575 385**

**PATENT ABSTRACTS OF JAPAN, Band 9, Nr. 17 (C-262)[1740], 24. Januar 1985; & JP-A-59 166 208 (TORAY K.K.) 19-09-1984**

(73) Patentinhaber: **GKSS Forschungszentrum Geesthacht GmbH**
**Max-Planck-Strasse**
**W-2054 Geesthacht(DE)**

(72) Erfinder: **Pinau, Ingo**
**Norderquerweg 77**
**W-2050 Hamburg 80(DE)**
Erfinder: **Wind, Jan**
**Zum Roggenhof 26**
**W-2000 Borsbüttel 1(DE)**

(74) Vertreter: **Schöning, Hans-Werner, Dipl.-Ing.**
**Patentanwälte Niedmers & Schöning Jessenstrasse 4**
**W-2000 Hamburg 50(DE)**

**EP 0 244 635 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Erhöhung der Selektivität einer integralasymmetrischen Membran zur Trennung von Gasen voneinander, wobei Membranbildner , Lösungsmittel und/oder Quellmittel gemischt, flächenhaft ausgebreitet, mit einem Fällmittel in Kontakt gebracht werden und als Membranbildner ein Polyetherimid und als Lösungsmittel ein halogenierter Kohlenwasserstoff verwendet werden, und daß auf die selektive Schicht der Membran ein gegenüber dem Membranbildner Lösungsmitteleigenschaften aufweisendes Fluid aufgebracht und nach einer vorgegebenen Einwirkzeit abgedampft wird.

Ein Verfahren dieser Art ist bekannt (EP-A-0 141 793). Mit dem bekannten Verfahren wurde versucht, die Selektivität von Polymermembranen dadurch zu verbessern, daß man nach Fertigstellung der Membran die selektive Schicht der Membran noch einmal mit einem Lösungsmittel behandelte. Diese Behandlung war deshalb erforderlich, weil aufgrund der sehr geringen Schichtdicken derartiger asymmetrischer Membranen Fehlstellen in der selektiven Schicht der Membran nicht ausgeschlossen werden konnten, wobei bekannt war, daß schon geringe Oberflächendefekte die Selektivität einer asymmetrischen Membran stark herabsetzen würden. Diese Fehlstellen konnten nach dem bekannten Verfahren durch Nachbehandlung mit dem Fluid bis zu einem gewissen Betrag vermindert werden, was dadurch bewirkt wurde, daß die selektive Schicht bis zu einem gewissen Grade aufquoll und die daraus resultierende Dehnung die Porenaußenwände der selektiven Schicht zusammenrücken ließ mit der Folge, daß sehr kleine Porendurchmesser (Störstellen) sogar vollständig verschlossen werden konnten. Die Nachbehandlung der selektiven Schicht mit dem Lösungsmitteleigenschaften aufweisenden Fluid ist somit auf das Schließen von Poren (Störstellen) mit geringen Durchmessern beschränkt und ist nicht geeignet, bei der Herstellung zwangsweise auftretende Poren (Störstellen) mit größeren Durchmessern zu schließen.

Aus der US-A-4 527 999 ist ein Verfahren zur Herstellung von asymmetrischen Polymer-Membranen bekannt, die eine großporige Oberfläche aufweisen, wobei die Poren einen Druchmesser > 5nm (50 Å) aufweisen. Grundsätzlich handelt es sich dabei um eine bestimmungsgemäß "poröse" Membran, die keinerlei tatsächliche Ähnlichkeit mit einer an sich schon glatten, glasartigen Membran hat. Diese bekannten Polymer-Membranen werden nachfolgend mit einer Lösung behandelt, die allerdings nicht lösend gegenüber dem Polymer der Membran sein sollte. Vielmehr handelt es sich um ein Elastomer, was zu einer Verhinderung einer hohen Selektivität bei hohen angestrebten Flußraten führt.

Im Patent Abstract of Japan, Band 9, Nr. 17 (C - 262) wird eine anisotrope Polymer-Membran beschrieben, die nach ihrer Herstellung in einer Gasatmosphäre mittels einer im einzelnen nicht beschriebenen Lösung zur Erreichung einer höheren Selektivität der Membran behandelt wird, um Fehlstellen in der Polymer-Membran zu verschließen.

In der DE-A-34 20 373 ist grundsätzlich beschrieben, wie asymmetrische Polyetherimid-Membranen mit einer effektiven Trennschicht herzustellen sind, die bei Ausführung als Mehrschichtmembranen wesentlich höhere Selektivitäten und Permeationsraten gegenüber den sogenannten Browall-Membranen aufweisen. Bei derartigen Polyetherimid-Membranen ist es zur Erzielung einer hohen Selektivität zwingend erforderlich, diese zusätzlich mit einem "Elastomerfilm" zu beschichten.

Es ist Aufgabe der vorliegenden Erfindung, ein Verfahren der eingangs genannten Art dahingehend zu verbessern, daß eine erhebliche Selektivitätssteigerung bei nur geringer Abnahme der Permeationsraten schneller Permeenten durch Beseitigung vorhandener Fehlstellen größeren Durchmessers einer asymmetrischen Polyetherimid-Membran erzielbar ist.

Gelöst wird die Aufgabe gemäß der Erfindung dadurch, daß dem Fluid Polyetherimid oder Polyvinylfluorid beigemischt wird.

Ist ein hochselektives Polymer in Form eines Polyetherimids im verwendeten Fluid gelöst, verbleibt vorteilhafterweise dieses Polymer nach vollständiger Verdampfung des Fluids auf der selektiven Schicht sowie in den Poren der asymmetrischen Membran. Zur Erhöhung der Selektivität einer asymmetrischen Polyetherimid-Membran ist es somit unwesentlich, eine absolut fehlstellenfreie Schicht dieses Zusatzpolymers zu erhalten, denn durch die Verwendung dieses zusätzlichen hochselektiven Polymers im Fluid werden vielmehr nicht nur kleine Poren verstopft, sondern auch größere Poren soweit verengt, daß sie faktisch geschlossen sind. Das Ergebnis sind Polyetherimid-Membranen mit gegenüber den nach dem bekannten Verfahren hergestellten Membranen stark vergrößerten Selektivitäten.

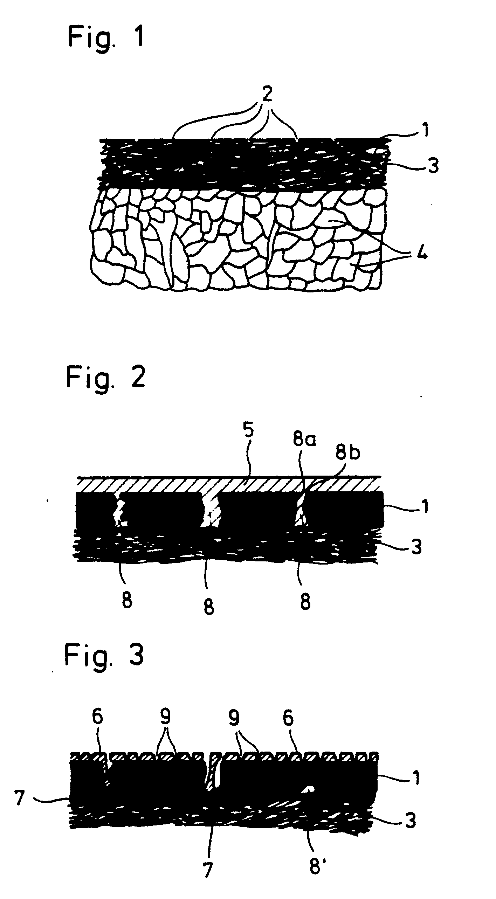

Die Erfindung wird im folgenden anhand von Ausführungsbeispielen mittels der Figuren 1 - 3 und Tabellen näher erläutert.

Figur 1 zeigt den schematischen Aufbau einer asymmetrischen Polyetherimid-Membran. Sie besteht aus einer ca. 0,1 bis 0,3 µm dünnen, selektiven Schicht 1, einer anschließenden ca. 10 µm dicken, stark verdichteten Schicht 3 sowie einer folgenden ca. 120 µm bis 150 µm dicken, hochporösen Stützschicht 4. Die Schichten 3 und 4 sind vollständig gasdurchlässig und geben der asymmetrischen Membran ihre

mechanische Festigkeit. Sind überhaupt keine Fehlstellen 2 in der selektiven Schicht 1 vorhanden, resultieren Membranen mit stoffspezifischen Selektiven des Materials dieser selektiven Schicht, während schon geringe Oberflächendefekte die Selektivität einer asymmetrischen Membran stark herabsetzen.

Die Herstellung hochselektiver Polyetherimid-Membranen nach dem erfindungsgemäßen Verfahren ist sehr einfach. Die selektive Schicht 1 (Figur 2) einer asymmetrischen Polyetherimid-Membran wird mit organischen Fluiden, die eine hohe Affinität zu Polyetherimid aufweisen oder mit Lösungen hochselektiver Polymere in diesen organischen Fluiden behandelt (tauchen, spritzen, streichen u. ä.).

Es bildet sich ein gleichmäßiger Film 5 auf der selektiven Schicht 1. Alle vorhandenen Fehlstellen sind mit organischem Fluid vollständig gefüllt. Da die organischen Fluide eine hohe Affinität zu Polyetherimid aufweisen, quillt die selektive Schicht 1, was eine erhebliche Volumenzunahme der selektiven Schicht zur Folge hat. Durch die resultierende Dehnung der Schicht 1 können die Porenaußenwände 8a und 8b zusammenrücken. Bei sehr kleinen Porendurchmessern können die Poren gar vollständig verschlossen werden (8′). Von wesentlichem Einfluß auf das erfindungsgemäße Verfahren ist die stark verdichtete Zone 3. Wie bereits erwähnt setzt diese Membranregion dem Gasfluß keinen Widerstand entgegen. Sie muß jedoch dem organischen Fluid einen erheblichen Widerstand entgegensetzen, d. h. es darf zu keiner nennenswerten Verteilung des organischen Fluids in dieser Schicht kommen, da eine Verdichtung dieser Schicht die effektive Membranschichtdicke auf < 10 $\mu$m erhöhen würde, was eine wesentliche Abnahme der Permeationsraten der schnelleren Permeenten zur Folge hätte. Ist der Widerstand der verdichteten Zone 3 jedoch so groß, daß das organische Fluid auf ihrer Oberfläche verbleibt, kann es zu einer wünschenswerten Verdichtung dieser Oberflächenregion kommen, so daß die Poren von innen verschlossen werden.

Ist ein hochselektives Polymer (z. B. Polyetherimid) im verwendeten organischen Fluid gelöst, verbleibt dieses Polymer 6, nach vollständiger Verdampfung des Fluids, auf der selektiven Schicht 1 sowie in den Poren 8 der asymmetrischen Membran (Figur 3). Zur Erhöhung der Selektivität einer asymmetrischen Polyetherimid-Membran ist es unwesentlich eine absolut fehlstellen freie Schicht 9 dieses Zusatzpolymers zu erhalten. Durch Verwendung eines hochselektiven Polymers werden vielmehr sehr kleine Poren verstopft bzw. größere Poren weiter verengt. Es resultieren Polyetherimid-Membranen mit verbesserten Selektivitäten gegenüber unbehandelte oder nur fluidbehandelten Membranen.

Die Größe der Selektivitätszunahme ist von der Art der organischen Fluide, der Kontaktzeit, der Temperatur, der Konzentration der hochselektiven Zusatzpolymere u. ä. abhängig.

Eine zusätzliche Beschichtung der selektiven Schicht mit einem linearen Styrol-Ethylen-Butylen-Styrol-Blockcopolymeren dient als Schutz der hochempfindlichen Trennschicht gegen äußere Einflüsse (z. B. Weiterverarbeitung der Membranen zu Modulen). Außerdem werden wenige, evtl. noch vorhandene Fehlstellen der verbesserten Membran verstopft, so daß ihre Selektivität nochmals gesteigert werden kann.

Die asymmetrische Membran besteht aus handelsüblichem Polyetherimid folgender Strukturformel:

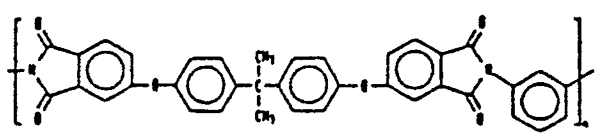

Die kommerziell erhältlichen Typen (Ultem, Hersteller General Electric) unterscheiden sich im wesentlichen in ihrer Chemikalienbeständigkeit sowie ihre Viskosität in Lösungen. Für das erfindungsgemäße Verfahren wurden unbehandelte Polyetherimid-Flachmembranen (DE-OS 34 20 373) verwendet. Das Verfahren ist jedoch auch für Hohlfaser- oder Schlauchmembranen aus Polyetherimid anwendbar, die gleiche Eigenschaften wie unbehandelte Polyetherimid-Flachmembranen aufweisen.

Es können alle organischen Fluide eingesetzt werden, die eine hohe Affinität zu Polyetherimid aufweisen (Lösungs-oder Quellverhalten gegenüber Polyetherimid). Als besonders günstig erweisen sich Ketone, inbesondere Ethylmethylketon und Cyclhexanon, Ester, insbesonders Methylformiat, Ethylformiat, Methylacetat und Ethylacetat, Alkylbenzole, insbesondere Xylol und Toluol sowie chlorierte Kohlenwasserstoffe, insbesonders Dichlormethan, Chloroform, 1,1,2-Trichlorethan und Trichlorethylen sowie alle Mischungen der genannten Stoffklassen.

Es können alle Polymere eingesetzt werden, die bei Raumbedingungen bzw. höheren Temperaturen (bis 200° C) in den genannten organischen Fluiden löslich sind, insbesonders Polyetherimide mit der Struktur

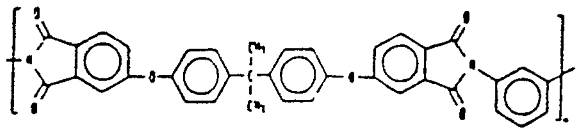

sowie Polyvinylfluorid 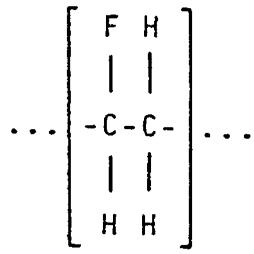

Für eine eventuell zusätzliche Beschichtung der verbesserten Polyetherimid-Membran können Styrol-Ethylen-Butylen-Styrol-Blockcopolymere (Kraton G, Hersteller Shell Chemical Co.) verwendet werden.

Beispiel 1

Alle in den folgenden Beispielen verwendeten asymmetrischen Polyetherimid-Membranen wurden nach dem von Peinemann DE-OS 34 20 373) entwickelten Verfahren gefertigt. Die Trocknung der Membranen erfolgte bei 150° C im Trockenschrank. Tabelle 1 zeigt die Trenneigenschaften unbehandelter asymmetrischer Polyetherimid-Membranen für verschiedene Gase bei 22° C und einer Partialdruckdifferenz von 5 bar.

| Nr. | $P/l_{He}$ ($m^3/m^2hbar$) | $P/l_{CO_2}$ ($m^3/m^2hbar$) | $P/l_{N_2}$ ($m^3/m^2hbar$) | $\alpha^{He}_{N_2}$ | $\alpha^{CO_2}_{N_2}$ |
|---|---|---|---|---|---|
| 1 | 0,337 | 0,060 | 0,020 | 17 | 3 |
| 2 | 0,344 | - | 0,029 | 12 | - |
| 3 | 0,401 | - | 0,055 | 7 | - |

Tabelle 1: Trenneigenschaften unbehandelter asymmetrischer Polyetherimid-Membranen

Weitere Messungen ergaben Helium-Permeationsraten von 0,3 bis 0,6 $m^3/m^2hbar$ mit $He/N_2$-Selektivitäten zwischen 5 und 20. Es zeigt sich, daß die Trennung nicht ausschließlich nach Knudsenströmung erfolgt, da sonst die theoretische $He/N_2$-Selektivität nur 2,65 betragen würde.

Obwohl unbehandelte Polyetherimid-Membranen über ausgezeichnete Permeationsraten der schnelleren Permeenten verfügen, ist ihr Einsatz als Gastrennmembran unwirtschaftlich, da die Selektivitäten wesentlich zu niedrig sind (sehr große Membranfläche notwendig zur Stofftrennung, d. h. Steigerung der Anlagenkosten).

| Behandlung | Nr. | $P/l_{He}$ ($m^3/m^2hbar$) | $P/l_{N_2}$ ($m^3/m^2hbar$) | $\alpha^{He}_{N_2}$ |
|---|---|---|---|---|
| 1x Ethylacetat | 4 | 0,285 | 0,003000 | 95 |
| 2x Ethylacetat | 5 | 0,191 | 0,000849 | 225 |
| 5x Ethylacetat | 6 | 0,222 | 0,001390 | 159 |
| 5x Ethylacetat | 7 | 0,329 | 0,002340 | 141 |
| 5x Ethylacetat | 8 | 0,185 | 0,000841 | 220 |
| 2x Ethylmethylketon | 9 | 0,186 | 0,000900 | 207 |
| 4x Methylformiat | 10 | 0,228 | 0,001500 | 150 |

Tabelle 2: Trenneigenschaften asymmetrischer Polyetherimid-Membranen nach Behandlung mit verschiedenen organischen Fluiden

Alle Membranen von Tabelle 2 wurden bei 150° C getrocknet. Die Behandlung der selektiven Schicht erfolgte durch ein-oder mehrmaliges Bestreichen mit verschiedenen organischen Fluiden und anschließender Trocknung bei 150° C.

Ein Vergleich der Trenneigenschaften der behandelten Membranen mit denen der unbehandelten Membranen (Tabelle 1) zeigt wesentlich erhöhte Selektivitäten bei geringer Abnahme der Permeationsraten der schnelleren Permeenten. Abweichungen der Selektivitäten und Permeationsraten resultieren, trotz gleicher Behandlung, aus unterschiedlichen Eigenschaften der jeweiligen unbehandelten asymmetrischen Polyetherimid-Membran. Peinemann (DE-OS 34 20 373) gibt für Silikon beschichtete Polyetherimid-Membranen eine He-Permeabilität von 0,25 $m^3/m^2hbar$ und eine $He-N_2$-Selektivität von 144 an.

Die Größe der Selektivitätssteigerung ist von der Art des organischen Fluids, der Kontaktzeit sowie der Temperatur abhängig. Es ist z. B. wesentlich, die feuchten, behandelten Membranen zuerst bei Raumbedingungen vorzutrocknen und erst anschließend bei erhöhter Temperatur die restlichen Bestandteile organischer Fluide zu entfernen.

| Behandlung | Nr. | $P/l_{He}$ ($m^3/m^2hbar$) | $P/l_{N_2}$ ($m^3/m^2hbar$) | $\alpha\,{}^{He}_{N_2}$ |
|---|---|---|---|---|
| Polyetherimid gelöst in Ethylmethylketon/Cyclohexanon 1:1 | | | | |
| 1x | 11 | 0,324 | 0,003400 | 95 |
| 2x | 12 | 0,210 | 0,000726 | 290 |
| 2x | 13 | 0,216 | 0,000877 | 246 |
| 2x | 14 | 0,255 | 0,001420 | 180 |
| 3x | 15 | 0,241 | 0,000975 | 247 |
| 3x | 16 | 0,222 | 0,000822 | 270 |
| Polyetherimid gelöst in Cyclohexanon | | | | |
| 1x | 17 | 0,312 | 0,001710 | 182 |
| 1x | 18 | 0,319 | 0,002510 | 127 |
| Polyvinylfluorid gelöst in Cyclohexanon | | | | |
| 1x | 19 | 0,204 | 0,000771 | 264 |
| 1x | 20 | 0,270 | 0,002420 | 112 |

Tabelle 3: Trenneigenschaften asymmetrischer Polyetherimid-Membranen nach Behandlung mit Lösungen hochselektiver Polymere.

Wie aus Tabelle 3 ersichtlich, wird die Selektivität asymmetrischer Polyetherimid-Membranen bei Behandlung mit Lösungen hochselektiver Polymere erheblich gesteigert. Die Behandlung der Membranen erfolgte durch ein- oder mehrmaliges Bestreichen und anschließender Verdampfung der organischen Fluide.

| Behandlung | Nr. | $P/l_{He}$ ($m^3/m^2hbar$) | $P/l_{N_2}$ ($m^3/m^2hbar$) | $\alpha_{N_2}^{He}$ |
|---|---|---|---|---|
| Polyvinylfluorid gelöst in Cyclohexanon 1x + Kraton G 1651-Beschichtung | 21 | 0,234 | 0,000870 | 269 |
| | 22 | 0,245 | 0,000968 | 253 |

Tabelle 4: Trenneigenschaften asymmetrischer Polyetherimid-Membranen nach Behandlung mit Lösungen hochselektiver Polymere und anschließender Styrol-Ethylen-Butylen-Styrol-Blockcopolymerisat-Beschichtung

| Gas | P/l ($m^3/m^2hbar$) | Selektivität (-) |
|---|---|---|
| $CH_4$ | 0,000558 | $He/N_2$ = 259 |
| $N_2$ | 0,000690 | He/Ar = 200 |
| Ar | 0,000896 | $H_2/CH_4$ = 247 |
| CO | 0,001390 | $H_2/CO_2$ = 5,9 |
| $O_2$ | 0,006280 | $H_2/CO$ = 99 |
| $CO_2$ | 0,23300 | $CO_2/CH_4$ = 42 |
| $H_2$ | 0,138000 | $CO_2/CO$ = 17 |
| He | 0,179000 | $O_2/N_2$ = 9,1 |

Tabelle 5: Trenneigenschaften asymmetrischer Polyetherimid-Membranen für verschiedene Gase nach einmaliger Behandlung mit Polyetherimid-Cyclohexanon-Lösung und einmaliger Beschichtung mit Styrol-Ethylen-Butylen-Styrol-Blockcopolymerisat.

Tabelle 4 und 5 zeigen die Trenneigenschaften asymmetrischer Polyetherimid-Membranen, die nach Behandlung mit Lösungen hochselektiver Polymere zusätzlich mit einem thermoplastischen Elastomer

beschichtet wurden. Es resultieren Membranen mit höheren Selektivitäten gegenüber Membranen nach Behandlung mit Lösungen hochselektiver Polymere. Das Styrol-Ethylen-Butylen-Blockcopolymerisat verschließt somit wenige, noch vorhandene Fehlstellen in der selektiven Schicht der behandelten Membran, bei nur sehr geringer Abnahme der Permeationsraten der schnelleren Gaskomponenten.

| Behandlung | Nr. | $P/l_{He}$ | $P/l_{N_2}$ | $P/l_{CH_4}$ ($m^3/m^2hbar$) | $P/l_{CO}$ | $P/l_H$ |
|---|---|---|---|---|---|---|
| Beschichtung mit Styrol-Ethylen-Butylen-Styrol-Blockcopolymerisat + Polyvinylfluorid gelöst in Methylethylketon 2 x | 23 | 0,175 | 0,00058 | 0,00048 | 0,0010 | 0,120 |

Tabelle 6: Trenneigenschaften asymmetrischer Polyetherimid-Membranen nach Beschichtung mit Styrol-Ethylen-Butylen-Styrol-Blockcopolymerisat und anschliessender zweimaliger Behandlung mit Polyvinylfluorid gelöst in Methylethylketon

Die Membranen nach Tabelle 6 wurden zuerst mit einer 0,10 %-gen Kraton G 1651 Lösung bestrichen. Nach vollständiger Entfernung des Lösungsmittels (Cyclohexan) wurde die Oberfläche zweimal mit einer Lösung von Polyvinylfluorid in Methylethylketon bestrichen. Die Trenneigenschaften der Membranen ähneln denen bei umgekehrter Behandlung (Tabelle 4 und 5).

Die aufgeführten Beispiele zeigen deutlich, daß das erfindungsgemäße Verfahren zur Erhöhung der Selektivität asymmetrischer Polyetherimid-Membranen vielseitig anwendbar ist und bei genauer Festlegung der Verfahrensparameter hochselektive Membranen ergibt, die für viele Anwendungsfälle einsetzbar sind ($He/N_2$-, He/Ar-, $H_2/CH_4$-, $H_2/CO$,- $H_2/CO_2$-, $CO_2/CH_4$-, $CO_2/CO$- und $O_2/N_2$-Trennung).

**Ansprüche**

1. Verfahren zur Erhöhung der Selektivität einer integralasymmetrischen Membran zur Trennung von Gasen voneinander, wobei Membranbildner, Lösungsmittel und/ oder Quellmittel gemischt, flächenhaft ausgebreitet, mit einem Fällmittel in Kontakt gebracht werden und als Membranbildner ein Polyetherimid und als Lösungsmittel ein halogenierter Kohlenwasserstoff verwendet werden, und daß auf die selektive Schicht der Membran ein gegen über dem Membranbildner Lösungsmitteleigenschaften aufweisendes Fluid aufgebracht und nach einer vorgegebenen Einwirkzeit abgedampft wird, dadurch gekennzeichnet, daß dem Fluid Polyetherimid oder Polyvinylfluorid beigemischt wird.

2. Verfahren nach Anspruch 1, dadurch gekennzeichnet, daß das Fluid durch Tauchen, Spritzen, Bestreichen oder Aufdampfen aufgebracht wird.

3. Verfahren nach einem oder beiden der Ansprüche 1 oder 2, dadurch gekennzeichnet, daß das Fluid gegenüber dem Membranbildner Quellmitteleigenschaften aufweist.

4. Verfahren nach einem oder mehreren der Ansprüche 1 bis 3, dadurch gekennzeichnet, daß die behandelten Membranen zusätzlich mit einem Styrol-Ethylen-Butylen-Styrol-Blockcopolymer überzogen werden.

5. Verfahren nach einem oder mehreren der Ansprüche 1 bis 4, dadurch gekennzeichnet, daß als organische Fluide Ketone, insbesonders Ethylmethylketon und Cyclohexanon, Ester, insbesonders Methylformiat, Ethylformiat, Methylacetat und Ethylacetat, Alkylbenzole, insbesonders Xylol und Toluol sowie chlorierte Kohlenwasserstoffe, insbesonders Dichlormethan, Chloroform, 1,1,2-Trichlorethan und Trichlorethylen verwendet werden.

6. Verfahren nach einem oder mehreren der Ansprüche 1 bis 5, dadurch gekennzeichnet, daß organische Fluide gemischt werden.

7. Verfahren nach einem oder mehreren der Ansprüche 4 bis 6, dadurch gekennzeichnet, daß das Polymer in Toluol oder Cyclohexan gelöst ist.

8. Verfahren nach einem oder mehreren der Ansprüche 1 bis 7, dadurch gekennzeichnet, daß die Membran als Schlauch-, Flach- oder Hohlfasermembran hergestellt wird.

## Claims

1. A method of enhancing the selectivity of an integral asymmetrical membrane for separating gases from one another, membrane formers, solvents and/or swelling agents being blended, spread out, brought into contact with a precipitating agent, a polyetherimide being used as the membrane former and an halogenated hydrocarbon being used as the solvent, and in that a fluid having solvent properties in respect of the membrane former is applied to the selective coating of the membrane and being evaporated off after a given reaction time, characterised in that polyetherimide or polyvinylfluoride is admixed with the fluid.

2. A method according to claim 1, characterised in that the fluid is applied by dipping, spraying, spreading or coating by evaporation.

3. A method according to one or both of claims 1 or 2, characterised in that the fluid has the properties of a swelling agent in respect of the membrane former.

4. A method according to one or more of claims 1 to 3, characterised in that the treated membranes are in addition coated with a styrene-ethylene-butylene-styrene-block copolymer.

5. A method according to one or more of claims 1 to 4, characterised in that ketones, particularly ethyl methyl ketone and cyclohexanone, esters, particularly methyl formiate, ethyl formiate, methyl acetate and ethyl acetate, alkyl benzenes, particularly xylene and toluene as well as chlorinated hydrocarbons, especially dichloromethane, chloroform, 1,1,2-trichloroethane and trichloroethylene are used as organic fluids.

6. A method according to one or more of claims 1 to 5, characterised in that organic fluids are blended.

7. A method according to one or more of claims 4 to 6, characterised in that the polymer is dissolved in toluene or cyclohexane.

8. A method according to one or more of claims 1 to 7, characterised in that the membrane is produced as a tubular, flat or hollow fibre membrane.

## Revendications

1. Procédé pour accroître la sélectivité d'une membrane intégralement asymétrique destinée à la séparation de gaz les uns des autres, procédé dans lequel on mélange une matière formant la membrane (formateur de membrane) avec un solvant et/ou un agent de gonflement, on étale le mélange en une surface que l'on met en contact avec un agent de précipitation et on utilise comme formateur de membrane un polyétherimide et comme solvant un hydrocarbure halogéné, et on applique sur la couche sélective de la membrane un liquide ayant un pouvoir solvant pour le formateur de membrane, que l'on évapore après une durée d'action déterminée, procédé caractérisé en ce que l'on mélange au liquide un polyétherimide ou du fluorure de polyvinyle.

2. Procédé selon la revendication 1, caractérisé en ce que le liquide est appliqué par immersion, pulvérisation, enduction ou évaporation.

3. Procédé selon l'une des revendications 1 et 2 ou les deux, caractérisé en ce que le liquide a un pouvoir gonflant à l'égard de la matière formant la membrane.

4. Procédé selon une ou plusieurs des revendications 1 à 3, caractérisé en ce que les membranes traitées sont ensuite en outre recouvertes d'un copolymère séquencé styrène-éthylène-butylène-styrène.

5. Procédé selon une ou plusieurs des revendications 1 à 4, caractérisé en ce que l'on utilise comme liquides organiques des cétones, en particulier l'éthylméthylcétone et la cyclohexanone, des esters, notamment le formiate de méthyle ou d'éthyle ou l'acétate de méthyle ou d'éthyle, des alkylbenzènes, en particulier xylènes et toluène, ou que des hydrocarbures chlorés, notamment le dichlorométhane, le chloroforme, le 1,1,2-trichloréthane et le trichloréthylène.

6. Procédé selon une ou plusieurs des revendications 1 à 5, caractérisé en ce que l'on utilise des mélanges de plusieurs liquides organiques.

7. Procédé selon une ou plusieurs des revendications 4 à 6, caractérisé en ce que le polymère est dissous dans du toluène ou du cyclohexane.

8. Procédé selon une ou plusieurs des revendications 1 à 7, caractérisé en ce que la membrane est formée en membrane en tuyau, en membrane plate ou en membrane de fibres creuses.

Fig. 1

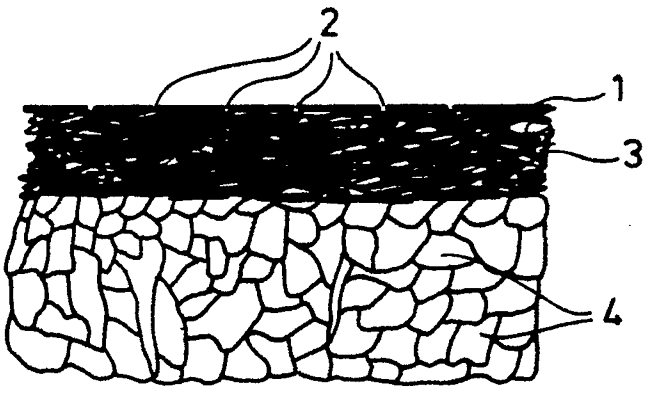


Fig. 2

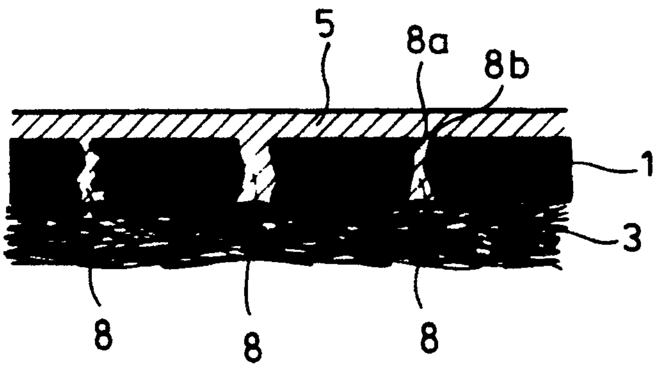


Fig. 3